(19) Europäisches Patentamt
European Patent Office
Office européen des brevets

(11) **EP 3 643 948 B1**

(12) **EUROPÄISCHE PATENTSCHRIFT**

(45) Veröffentlichungstag und Bekanntmachung des Hinweises auf die Patenterteilung:
**27.12.2023   Patentblatt 2023/52**

(21) Anmeldenummer: **19203995.6**

(22) Anmeldetag: **18.10.2019**

(51) Internationale Patentklassifikation (IPC):
*F16H 59/02* (2006.01)   *F16H 59/48* (2006.01)
*F16H 59/52* (2006.01)   *F16H 59/66* (2006.01)
*F16H 61/00* (2006.01)   *F16H 61/02* (2006.01)

(52) Gemeinsame Patentklassifikation (CPC):
**F16H 59/02; F16H 59/0204; F16H 59/48; F16H 59/52; F16H 59/66; F16H 61/00; F16H 61/0213**

(54) **VERFAHREN ZUM KONFIGURIEREN UND BETREIBEN EINES AUTOMATIKGETRIEBES**

METHOD FOR CONFIGURING AND OPERATING AN AUTOMATIC TRANSMISSION

PROCÉDÉ DE CONFIGURATION ET DE FONCTIONNEMENT D'UNE TRANSMISSION AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2018   DE 102018126675**

(43) Veröffentlichungstag der Anmeldung:
**29.04.2020   Patentblatt 2020/18**

(73) Patentinhaber: **MAN Truck & Bus SE**
**80995 München (DE)**

(72) Erfinder:
• **Hönle, Jochen**
**86559 Adelzhausen (DE)**
• **Scharlach, Norbert**
**81243 München (DE)**

(74) Vertreter: **v. Bezold & Partner Patentanwälte - PartG mbB**
**Ridlerstraße 57**
**80339 München (DE)**

(56) Entgegenhaltungen:
DE-A1- 10 254 628       DE-A1-102007 015 355
DE-A1-102007 031 725    DE-A1-102011 087 771
US-A1- 2001 007 964

**Beschreibung**

Die Erfindung betrifft ein Verfahren zum Konfigurieren und Betreiben eines Automatikgetriebes eines Kraftfahrzeugs, vorzugsweise eines Nutzfahrzeugs.

Zur Ziel- bzw. Sollgang-Ermittlung eines Automatikgetriebes können verschiedene Verfahren verwendet werden. In einem besonders einfachen Fall kann beispielsweise lediglich eine aktuelle Motordrehzahl erfasst und entsprechend der erfassten Motordrehzahl geschaltet werden. Z. B kann bei einer niedrigen Motordrehzahl runtergeschaltet, bei einer mittlerer Motordrehzahl der aktuelle Gang gehalten und bei einer hohen Motordrehzahl hochgeschaltet werden. Es sind allerdings auch komplexere Verfahren bekannt. Herkömmlich werden hierbei beispielsweise absolute Zahlen für die aktuelle Zugkraft des Kraftfahrzeugs und den aktuellen Fahrwiderstand des Kraftfahrzeugs ermittelt. Darauf basierend könnte beispielsweise ein aktueller Leistungsbedarf bestimmt werden und demnach auch ein Zielgang für das Automatikgetriebe.

Die US 2001/007964 A1 betrifft ein Verfahren zur Ermittlung einer Übersetzung für ein im Antriebsstrang eines Kraftfahrzeugs angeordnetes automatisiertes Getriebe, wobei in einem Steuergerät Betriebsparameter des Kraftfahrzeugs zur Ermittlung der Übersetzung bereitgestellt werden. Es ist vorgesehen, dass die Übersetzung des Getriebes in Abhängigkeit von einer momentanen Fahrzeuglast festgelegt wird.

Die DE 10 2007 015 355 A1 offenbart eine Steuerungsvorrichtung eines automatisierten Stufenschaltgetriebes. Zur Erhöhung der Einsatzflexibilität und der Funktionssicherheit des Stufenschaltgetriebes ist vorgesehen, dass mehrere Gruppen von Steuerdatensätzen permanent auf einem Datenspeicher abgespeichert sind. Jede Gruppe von Steuerdatensätzen ist jeweils für eine andere Antriebsstrangkonfiguration und/oder einen anderen Einsatzzweck des Kraftfahrzeugs vorgesehen. Die für die vorliegende Antriebsstrangkonfiguration und/oder den vorliegenden Einsatzzweck des Kraftfahrzeugs ausgelegte Gruppe von Steuerdatensätzen ist für eine Nutzung freigeschaltet und die übrigen Gruppen von Steuerdatensätzen sind für eine Nutzung gesperrt.

Bekannte Vorrichtungen und Verfahren können den Nachteil aufweisen, das beispielsweise für jede Antriebsstrangkonfiguration eine eigene Schaltstrategie in Form eines Betriebsprogramms für das Automatikgetriebe erstellt und validiert werden muss. Damit einher geht ein hoher Applikationsaufwand, insbesondere unter Berücksichtigung der Vielfalt an möglichen Antriebssträngen, die sich beispielsweise im Baukastenprinzip aus unterschiedlichen Antrieben, unterschiedlichen Automatikgetrieben usw. zusammenstellen lassen.

Der Erfindung liegt die Aufgabe zu Grunde, ein alternatives und/oder verbessertes Verfahren zum Konfigurieren und Betreiben eines Automatikgetriebes zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Verfahren zum Konfigurieren und Betreiben eines Automatikgetriebes, vorzugsweise eines Automatik-Stufenschaltgetriebes, eines Kraftfahrzeugs, vorzugsweise eines Nutzfahrzeugs (zum Beispiel Lastkraftwagen oder Omnibus). Das Verfahren weist ein Bereitstellen (z. B. permanentes Abspeichern) eines, vorzugsweise fahrzeug- und/oder triebstrangunabhängigen, Betriebsprogramms (z. B. Schaltstrategie-Betriebsprogramm) auf. Das Betriebsprogramm ist zum Betreiben (zum Beispiel Steuern, zum Beispiel zur Gangwahl) des Automatikgetriebes in Abhängigkeit von einer Ermittlung eines relativen Kennwerts (zum Beispiel relativer Längsdynamik-Kennwert, zum Beispiel relativer Beschleunigung-Kennwert) konfiguriert. Der relative Kennwert setzt einen (z. B. erfassten, ermittelten, berechneten, bestimmten) aktuellen Längsdynamikkennwert des Kraftfahrzeugs ins Verhältnis zu einem (z. B. erfassten, ermittelten, berechneten, bestimmten) Referenzlängsdynamikkennwert des Kraftfahrzeugs. Das Verfahren weist ferner ein fahrzeugspezifisches und/oder triebstrangspezifisches Anpassen des Betriebsprogramms durch Festlegen eines fahrzeugspezifischen und/oder triebstrangspezifischen Referenzauslegungspunkts, in dessen Abhängigkeit der Referenzlängsdynamikkennwert ermittelt wird, auf.

Vorzugsweise kann die vorliegende Erfindung damit den Einfluss von unterschiedlichen Fahrzeugkomponenten und Aggregaten auf die Applikation einer Schaltstrategie minimieren. Zweckmäßig kann sichergestellt werden, dass sich eine bestehende Applikation weitgehend unabhängig von Einflüssen von Antrieb und Triebstrang in unterschiedlichsten Fahrzeugkonfigurationen ähnlich verhält. Somit kann bspw. garantiert werden, dass sich bspw. innerhalb einer Fahrzeugklasse oder auch fahrzeugklassenübergreifend (z. B. schwere, mittlere und leichte Lastkraftwagen) - trotz einer Vielfalt von Antrieben und Triebsträngen - die Fahrzeuge aus Kundensicht fahrdynamisch ähnlich verhalten. Vorzugsweise muss dadurch nicht für jede Fahrzeugkonfiguration ein eigenes Betriebsprogramm erstellt und validiert werden. Zusätzlich kann zweckmäßig ein Kunden- und Markennutzen aufgrund des ähnlichen Verhaltes unterschiedlicher Fahrzeuge bestehen. Im Gegensatz zu herkömmlichen Schaltstrategien kann nämlich mittels eines relativen Kennwerts, der sich analog für unterschiedlichste Fahrzeugkonfigurationen ermitteln lässt, auf einen identischen Betriebsdatensatz (z. B. Kennfeld und/oder Tabelle) des Betriebsprogramms in den unterschiedlichen Fahrzeugkonfigurationen zurückgegriffen werden. Dazu kann bspw. ein Leistungsbedarf in den einzelnen Gängen des Automatikgetriebes in Abhängigkeit von Kenngrößen aufgetragen werden, die das Fahrzeugverhalten geeignet charakterisieren. Zusätzlich werden die Kenngrößen auf einen Referenzauslegungspunkt (Leistungsklasse, Masse) bezogen. Um eine Applikation dann auf einen Fahrzeugtyp anzupassen, kann dann nur dieser Referenzauslegungspunkt geeignet gewählt. So kann bspw. definiert werden, dass ein starker Motor bei vollbeladenem Fahrzeug eine ähnliche Leistungsreserve benötigt wie ein schwächerer Motor bei Teilbeladung. Ebenso können mit dieser Methodik z. B. Gangsprünge für unterschiedliche Getriebe oder auch der Leistungsbedarf von einer Referenzapplikation abgeleitet werden.

Wie hierin verwendet kann sich der Begriff "Automatikgetriebe" vorzugsweise auch auf automatisierte Getriebe (z. B. Handschaltgetriebe mit Aktuatorik) beziehen.

Bspw. kann das Automatikgetriebe ein Doppelkupplungsgetriebe sein.

Es ist bspw. möglich, dass das Bereitstellen des Betriebsprogramms und das fahrzeugspezifische und/oder triebstrangspezifische Anpassen des Betriebsprogramms nacheinander oder gleichzeitig ausgeführt werden.

In einem Ausführungsbeispiel weist der Referenzauslegungspunkt eine Referenzfahrzeugmasse, vorzugsweise eine Fahrzeugmasse bei zulässiger Vollbeladung oder eine für die Fahrdynamik eines Einsatzzwecks charakteristische Fahrzeugmasse, des Kraftfahrzeugs auf oder von dieser abgeleitet. Damit kann die jeweilige Fahrzeugmasse des Kraftfahrzeugs bei der Ermittlung des relativen Kennwerts berücksichtigt werden. Bspw. kann die Referenzfahrzeugmasse bei schwächeren Motoren kleiner sein als bei größeren Motoren, sodass sich bspw. bei kleinerer Beladung des Fahrzeugs mit schwächerem Antrieb eine ähnliche Leistungsreserve ergibt wie bei Fahrzeugen mit stärkerem Antrieb und größerer Beladung.

In einem weiteren Ausführungsbeispiel weist der Referenzauslegungspunkt eine (z. B. gangspezifische) Referenzfahrzeugzugkraft des Kraftfahrzeugs auf oder von ist von dieser abgeleitet. Damit kann die jeweilige Leitungsklasse des Kraftfahrzeugs bei der Ermittlung des relativen Kennwerts berücksichtigt werden.

In einer Weiterbildung weist der Referenzauslegungspunkt die Referenzfahrzeugmasse und die Referenzfahrzeugzugkraft des Kraftfahrzeugs auf und die Referenzfahrzeugzugkraft ist in Abhängigkeit von der Referenzfahrzeugmasse festgelegt (z. B. wie groß ist die triebstrangspezifische Zugkraft bei der gewählten Referenzfahrzeugmasse).

Bspw. kann die Referenzfahrzeugzugkraft von einem maximalen Motordrehmoment abgeleitet werden.

In einem weiteren Ausführungsbeispiel verhalten sich Kraftfahrzeuge mit unterschiedlicher Fahrzeugmasse, unterschiedlichem Einsatzzweck und/oder unterschiedlicher Zugkraft eines Antriebstrangs des jeweiligen Kraftfahrzeugs bei Betrieb im Bereich des Referenzauslegungspunkts, vorzugsweise wenn eine jeweilige aktuelle Fahrzeugmasse einer jeweiligen Referenzfahrzeugmasse in Wesentlichen entspricht, fahrdynamisch im Wesentlichen gleich oder ähnlich.

In einer Ausführungsform wird das Betriebsprogramm in einer Vielzahl von Kraftfahrzeugen mit unterschiedlicher Fahrzeugleermasse, unterschiedlichem zulässigen Gesamtgewicht, unterschiedlichen Einsatzzwecken und/oder unterschiedlicher Antriebsstrangkonfigurationen, vorzugsweise aufweisend unterschiedliche Antriebsleistungen und/oder unterschiedliche Automatikgetriebe, verwendet oder ist entsprechend verwendbar.

In einer weiteren Ausführungsform weist das Betriebsprogramm einen, vorzugsweise fahrzeug- und/oder triebstrangunabhängigen, Betriebsdatensatz, vorzugsweise in Form zumindest eines Kennfelds und/oder zumindest einer Tabelle, auf, der als Eingangsgröße den relativen Kennwert und/oder als Ausgangsgröße einen Leistungsbedarf, einen Motordrehzahlbedarf, ein gefordertes Übersetzungsverhältnis, einen Zielgang und/oder eine davon abgeleitete Größe des Automatikgetriebes aufweist.

In einer weiteren Ausführungsform wird der relative Kennwert während des Betriebs des Kraftfahrzeugs kontinuierlich ermittelt oder aktualisiert und/oder das Betriebsprogramm betreibt das Automatikgetriebe in Abhängigkeit von einem aktuellen relativen Kennwert.

In einer Ausführungsvariante ist der relative Kennwert dimensionslos.

In einer weiteren Ausführungsvariante ist der aktuelle Längsdynamikkennwert ein im Betrieb des Kraftfahrzeugs aktuell abrufbarer Längsdynamikkennwert des Kraftfahrzeugs (z. B. im jeweils eingelegten Gang des Automatikgetriebes) und/oder der Referenzlängsdynamikkennwert bspw. ein Maximallängsdynamikkennwert bezüglich des Referenzauslegungspunkts (z. B. im jeweils eingelegten Gang des Automatikgetriebes).

Es ist möglich, dass der Referenzlängsdynamikkennwert nicht der Maximallängsdynamickennwert ist, sondern stattdessen als beliebiger (z. B. charakteristischer) Längsdynamikkennwert bezüglich des Referenzauslegungspunkts gewählt ist.

In einer weiteren Ausführungsvariante ist der aktuelle Längsdynamikkennwert eine im Betrieb des Kraftfahrzeugs aktuell abrufbare (bzw. verfügbare) Fahrzeugbeschleunigung, eine im Betrieb des Kraftfahrzeugs aktuell abrufbare (bzw. verfügbare) Antriebsdrehzahlbeschleunigung und/oder ein von einer im Betrieb des Kraftfahrzeugs aktuell abrufbaren (bzw. verfügbaren) Fahrzeugbeschleunigung abgeleiteter Wert.

In einem Ausführungsbeispiel wird der aktuelle Längsdynamikkennwert basierend auf einer aktuellen Zugkraft eines Antriebsstrangs des Kraftfahrzeugs (z. B. im jeweils eingelegten Gang des Automatikgetriebes), einem aktuellen Fahrwiderstand des Kraftfahrzeugs und/oder von einer aktuellen Fahrzeugmasse des Kraftfahrzeugs ermittelt (z. B. berechnet) oder ist entsprechend ermittelbar (z. B. berechenbar).

In einem weiteren Ausführungsbeispiel ist der Referenzlängsdynamikkennwert eine maximale Fahrzeugbeschleunigung (z. B. im jeweils eingelegten Gang des Automatikgetriebes), eine maximale Antriebsdrehzahlbeschleunigung(z. B. im jeweils eingelegten Gang des Automatikgetriebes) und/oder ein von der maximalen Fahrzeugbeschleunigung (z. B. im jeweils eingelegten Gang des Automatikgetriebes) abgeleiteter Wert.

In einem weiteren Ausführungsbeispiel wird der Referenzlängsdynamikkennwert basierend auf einer Referenzfahrzeugzugkraft des Kraftfahrzeugs (z. B. im jeweils eingelegten Gang des Automatikgetriebes) und/oder einer Referenzfahrzeugmasse, die vorzugweise eine Fahrzeugmasse bei zulässiger Vollbeladung des Kraftfahrzeugs ist, ermittelt (z. B. berechnet) oder ist entsprechend ermittelbar (z. B. berechenbar).

In einer Ausführungsform wird der aktuelle Längsdynamikkennwert und/oder der Referenzlängsdynamikkennwert in Abhängigkeit von einer Antriebszusatzmasse, die durch ein Massenträgheitsmoment eines Antriebs des Kraftfahrzeugs in einem jeweils eingelegten Gang des Automatikgetriebes bewirkt wird, ermittelt oder ist entsprechend ermittelbar.

Die Erfindung betrifft auch ein Kraftfahrzeug, vorzugsweise ein Nutzfahrzeug (z. B. Lastkraftwagen oder Omnibus), mit einem Automatikgetriebe, das mit einem Verfahren wie hierin offenbart betrieben wird und/oder konfiguriert ist (z. B. mittels eines Getriebesteuergeräts und/oder eines Zentralsteuergeräts, das zum Ausführen des Verfahrens konfiguriert ist).

Die Offenbarung ist auch auf ein Verfahren zum Betreiben eines Automatikgetriebes, vorzugsweise eines Automatik-Stufenschaltgetriebes, eines Kraftfahrzeugs, vorzugsweise Nutzfahrzeugs, gerichtet. Das Verfahren weist ein Ermitteln (z. B. Berechnen, Bestimmen, Erfassen) eines relativen Kennwerts, der einen (z. B. erfassten, ermittelten, berechneten, bestimmten usw.) aktuellen Längsdynamikkennwert des Kraftfahrzeugs ins Verhältnis zu einem Referenzlängsdynamikkennwert des Kraftfahrzeugs setzt, auf. Das Verfahren weist auch ein Betreiben des Automatikgetriebes in Abhängigkeit von dem ermittelten relativen Kennwert auf.

Der Begriff "Steuergerät" kann sich auf eine Elektronik und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1　eine schematische Darstellung eines Kraftfahrzeugs gemäß einem Ausführungsbeispiel der vorliegenden Offenbarung;

Figur 2　eine schematische Darstellung eines Verfahrens zum Konfigurieren und Betreiben eines Automatikgetriebes eines Kraftfahrzeugs gemäß einem Ausführungsbeispiel der vorliegenden Offenbarung;

Figur 3　zeigt rein exemplarisch einen Auszug aus einem Kennfeld eines Betriebsprogramms zum Betreiben eines Automatikgetriebes eines Kraftfahrzeugs gemäß einem Ausführungsbeispiel der vorliegenden Offenbarung; und

Figur 4　zeigt rein exemplarisch einen weiteren Auszug aus einem Kennfeld eines Betriebsprogramms zum Betreiben eines Automatikgetriebes eines Kraftfahrzeugs gemäß einem Ausführungsbeispiel der vorliegenden Offenbarung.

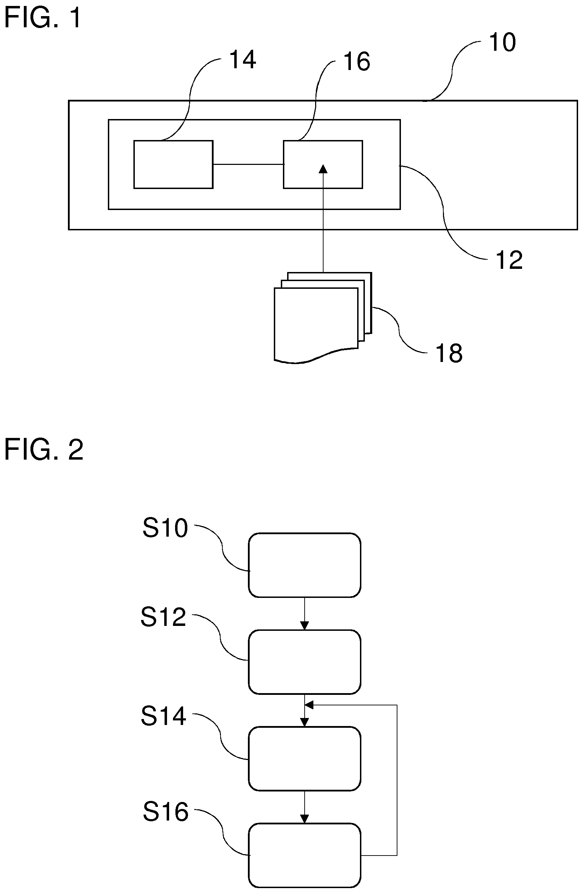

Die Figur 1 zeigt schematisch ein Kraftfahrzeug 10. Das Kraftfahrzeug 10 kann insbesondere ein Nutzfahrzeug, zum Beispiel ein Lastkraftwagen oder ein Omnibus, sein.

Das Kraftfahrzeug 10 weist einen Antriebsstrang 12 auf. Der Antriebsstrang 12 weist einen Antrieb 14, z. B. einen Verbrennungs- und/oder einen Elektroantrieb, und ein Automatikgetriebe 16 auf. Der Antrieb 14 ist trieblich mit dem Automatikgetriebe 16 verbunden. Der Antrieb 14 treibt das Kraftfahrzeug 10 an. Das hierin offenbarte Verfahren könnte bspw. auch angewendet werden, um eine Leistungscharakteristik eines Elektromotors zu beeinflussen.

Das Automatikgetriebe 16 ist bspw. ein Automatik-Stufenschaltgetriebe. Das Automatikgetriebe 16 ist dazu ausgebildet, die Gänge des Automatikgetriebes 16 automatisch zu schalten. Das Automatikgetriebe 16 kann hierfür beispielsweise von einem Getriebesteuergerät oder einem Zentralsteuergerät des Kraftfahrzeugs 10 gesteuert werden. Eine Gangwahl des Automatikgetriebes 16 erfolgt gemäß einer Ausgabe eines Betriebsprogramms 18. Das Betriebsprogramm 18 kann während des Betriebs des Kraftfahrzeugs 10 bspw. auf dem Getriebesteuergerät oder dem Zentralsteuergerät ausgeführt werden. Das Betriebsprogramm 18 weist die Informationen zur Schaltstrategie des Automatikgetriebes 16 auf.

Die Figur 2 zeigt ein beispielhaftes Verfahren, wie das Betriebsprogramm 18 initial konfiguriert (Schritte S10 und S12) und während des Betriebs des Kraftfahrzeugs 10 verwendet wird (Schritte S14 und S16).

In einem Verfahrensschritt S10 wird das Betriebsprogramm 18 bspw. auf dem Getriebesteuergerät oder dem Zentralsteuergerät zum Betreiben des Automatikgetriebes 16 bereitgestellt. Z. B. kann das Betriebsprogramm 18 auf einem vorzugsweise nicht-flüchtigen Speicher des entsprechenden Steuergeräts abgespeichert werden.

Das Betriebsprogramm 18 ist so konfiguriert, dass das Automatikgetriebe 16 in Abhängigkeit eines zweckmäßig dimensionslosen relativen Kennwerts betrieben wird. Der relative Kennwert setzt einen im Betrieb des Kraftfahrzeugs 10 aktuell ermittelten Längsdynamikkennwert ins Verhältnis zu einem Referenzlängsdynamikkennwert des Kraftfahrzeugs 10, wie nachfolgend beispielhaft beschrieben ist.

Der aktuelle Längsdynamikkennwert kann bspw. eine im Betrieb des Kraftfahrzeugs 10 aktuell abrufbare Fahrzeugbeschleunigung oder ein davon abgeleiteter Wert sein, z. B. eine im Betrieb des Kraftfahrzeugs 10 aktuell abrufbare Antriebsdrehzahlbeschleunigung, z. B. im aktuell eingelegten Gang.

Die aktuelle Fahrzeugbeschleunigung kann bspw. wie folgt ermittelt werden:

$$a_{verf} = \frac{F_{Zug} - F_{Fwd}}{m_{Fzg} + m_{Motor}}$$

wobei:

$a_{verf}$     = Fahrzeugbeschleunigung [m/s$^2$]

$F_{Zug}$     = Zugkraft im aktuellen Gang des Automatikgetriebes [N]

$F_{Fwd}$     = aktueller Fahrwiderstand [N]

$m_{Fzg}$     = aktuelle Fahrzeugmasse (mit Beladung) [kg]

$m_{Motor}$     = Antriebszusatzmasse im aktuellen Gang [kg]

Die aktuelle Zugkraft F_Zug kann ein zweckmäßig vorbestimmter Wert sein, der von dem aktuellen Gang des Automatikgetriebes 16 und der Konfiguration des Antriebsstrangs 12 (z. B. Antriebsleistung des Antriebs 14) abhängt. Es kann bspw. die jeweilige Maximalzugkraft verwendet werden oder auch ein beliebiger aus der Motorcharakteristik abgeleiteter Punkt gewählt werden (z. B. am Punkt des maximalen Drehmoments, der maximalen Leistung). In anderen Worten ist die aktuelle Zugkraft F_Zug eine Umrechnung des Antriebsdrehmoments des Antriebs 14 auf den jeweils eingelegten Gang des Automatikgetriebes 16.

Der aktuelle Fahrwiderstand F_Fwd kann ein im Betrieb des Kraftfahrzeugs 10 ermittelter Wert (z. B. Schätzwert), der bspw. von einer Steigung, einem Gefälle, einer Windstärke, einer Bodenreibung usw. abhängt, sein.

Die aktuelle Fahrzeugmasse m_Fzg kann ein Mess- und/oder Schätzwert sein, der bspw. von einem Masseschätzer aus einer positiven oder negativen Beschleunigung des Kraftfahrzeugs 10 ermittelt wird.

Die Antriebszusatzmasse m_Motor im aktuellen Gang bzw. das auf eine zusätzliche Fahrzeugmasse im jeweiligen Gang umgerechnete Massenträgheitsmoment des Antriebs 14 kann bspw. wie folgt ermittelt werden:

$$m_{Motor} = J_{Motor} \cdot \frac{i_{Ant}^2}{r_{dyn}^2}$$

wobei:

$J_{Motor}$     = Trägheitsmoment des Antriebs 14 [kgm$^2$]

$i_{Ant}$     = Gesamtantriebsstrangübersetzung des Antriebsstrangs 12 [-]

$r_{dyn}$     = dynamischer Reifenhalbmesser [-]

Der Referenzlängsdynamikkennwert kann wiederum bspw. wie folgt ermittelt werden:

$$a_{Ref} = \frac{F_{Zug,Ref}}{m_{Ref} + m_{Motor}}$$

wobei:

$a_{Ref}$     = Referenzlängsdynamikkennwert

$F_{Zug,Ref}$     = Referenzfahrzeugzugkraft

$m_{Ref}$     = Referenzfahrzeugmasse

Die Referenzfahrzeugzugkraft F_Zug,Ref dient als antriebstrangspezifischer Referenzauslegungspunkt für das Betriebsprogramm 18. Die Referenzfahrzeugzugkraft F_Zug,Ref kann in Abhängigkeit von der Referenzfahrzeugmasse m_Ref festgelegt sein. Vorzugsweise kann die Referenzfahrzeugzugkraft F_Zug,Ref diejenige Zugkraft sein, die abrufbar ist, wenn das Kraftfahrzeug 10 die Referenzfahrzeugmasse m_Ref aufweist. Bspw. kann die Referenzfahrzeugzugkraft F_Zug,Ref aus einem Motorkennfeld abgeleitet werden. Die Referenzfahrzeugzugkraft F_Zug,Ref kann unterschiedlich von der aktuellen Zugkraft F_Zug gewählt werden.

Die Referenzfahrzeugmasse m_Ref dient als fahrzeug- und antriebstrangspezifischer Referenzauslegungspunkt für das Betriebsprogramm 18. Bspw. kann die Referenzfahrzeugmasse m_Ref eine Fahrzeugmasse bei zulässiger Vollbeladung des Kraftfahrzeugs 10 sein, z. B. 40 t bei einem schweren Lastkraftwagen.

Der dimensionslose relative Kennwert kann sich somit bspw. als Quotient aus dem aktuellen Längsdynamikkennwert und dem Referenzlängsdynamikkennwert ergeben.

$$a = \frac{a_{verf}}{a_{Ref}}$$

wobei:

$a$ = dimensionsloser relativer (Beschleunigungs-) Kennwert

Der ermittelte dimensionslose relative Kennwert dient zweckmäßig als Eingangsgröße für einen vorzugsweise vorbestimmten Betriebsdatensatz des Betriebsprogramms 18. Der Betriebsdatensatz kann bspw. ein oder mehrere Kennfelder, eine oder mehrere Tabellen und/oder eine oder mehrere Formeln aufweisen. Mittels des Betriebsdatensatzes wird basierend auf dem aktuell ermittelten relativen Kennwert ermittelt, ob eine Gangschaltung erforderlich ist und wenn ja, in welchen Gang das Automatikgetriebe zu schalten ist.

Wie aus den vorherigen Ausführungen ersichtlich, kann das Betriebsprogramm 18 fahrzeug- und antriebsstrangspezifisch im konfiguriert werden, nämlich im Schritt S12. Hier kann durch Vorbestimmen und Abspeichern der Werte für die Referenzfahrzeugzugkraft F_Zug,Ref in den jeweiligen Gängen und der Referenzfahrzeugmasse m_Ref das Betriebsprogramm fahrzeug- und triebstrangindividuell konfiguriert werden.

Durch Vorgabe andererfahrzeug- und/oder triebstrangspezifischer vorbestimmter Werte, z. B. für die Referenzfahrzeugzugkraft F_Zug,Ref und für die Referenzfahrzeugmasse m_Ref, kann das Betriebsprogramm 18 somit individuell auf andere Fahrzeuge angepasst werden. Im Prinzip kann das Betriebsprogramm 18 somit für eine Vielzahl von unterschiedlichen Fahrzeugen mit unterschiedlichen Fahrzeugleermassen, unterschiedlichen Einsatzzwecken und/oder unterschiedlichen Antriebsstrangkonfigurationen verwendet werden. Bspw. können die Fahrzeuge lediglich alle einer bestimmten Fahrzeugklasse angehören (z. B. leichte, mittlere und schwere Lastkraftwagen).

Eine Besonderheit des Verfahrens liegt in der Verwendung des Referenzauslegungspunkts, z. B. in Form der Referenzfahrzeugmasse, bei der Ermittlung des relativen Kennwerts. Kraftfahrzeuge mit unterschiedlichen Antriebssträngen verhalten sich daher, wenn sie aktuell im Bereich des Referenzauslegungspunktes betrieben werden, fahrdynamisch gleich oder zumindest ähnlich. Der Grund hierfür ist, dass alle Kraftfahrzeuge den gleichen Betriebsdatensatz nutzen, was wiederum durch die Verwendung des relativen Kennwerts ermöglicht wird.

Es ist somit möglich, das Betriebsprogramm 18 nur durch geeignetes Wählen des Referenzauslegungspunkt auf ein Kraftfahrzeug anzupassen. So kann bspw. definiert werden, dass ein starker Antrieb 14 bei vollbeladenem Fahrzeug eine ähnliche Leistungsreserve benötigt wie ein schwächerer Antrieb 14 bei Teilbeladung. Ebenso können mit dieser Methodik z. B. Gangsprünge für unterschiedliche Getriebe oder auch der Leistungsbedarf von einer Referenzapplikation abgeleitet werden.

Das vorliegende Konfigurationsverfahren minimiert damit den Einfluss von unterschiedlichen Fahrzeugkomponenten und Aggregaten auf die Applikation einer Schaltstrategie bezüglich des jeweiligen Automatikgetriebes. Damit kann beispielsweise sichergestellt werden, dass sich ein bestehendes Betriebsprogramm weitgehend unabhängig von Einflüssen von Antrieb und Triebstrang in unterschiedlichsten Fahrzeugkonfigurationen ähnlich verhält. Somit kann gegebenenfalls garantiert werden, dass sich innerhalb einer Fahrzeugklasse - trotz einer Vielfalt von Antrieben und Triebsträngen - die Fahrzeuge aus Kundensicht fahrdynamisch ähnlich verhalten. Zusätzlich zu dem Kunden- und Markennutzen kann damit der Applikationsaufwand drastisch reduziert, da nicht für jede Fahrzeugkonfiguration eine Applikation erstellt und validiert werden muss.

Es ist möglich, dass die Schritte S10 und S12 gleichzeitig oder nacheinander durchgeführt werden.

Im Betrieb des Kraftfahrzeugs können die Schritte S14 und S16 bspw. zyklisch durchgeführt werden.

Im Schritt S14 wird fortwährend der relative Kennwert ermittelt, z. B. wie hierin beschrieben ist. Beispielsweise werden fortwährend eine aktuell verfügbare Motordrehzahlbeschleunigung oder Fahrzeugbeschleunigung basierend auf der aktuell verfügbaren Beschleunigung (aktuelle Zugkraft - aktueller Fahrwiderstand) geteilt durch die aktuelle Fahrzeugmasse berechnet. Diese verfügbare Motordrehzahlbeschleunigung wird bezogen auf eine Referenzmotordrehzahlbeschleunigung oder Referenzfahrzeugbeschleunigung, zum Beispiel jeweils als maximale Beschleunigungswerte. Der relative Beschleunigungs- bzw. Längsdynamikkennwert kann sich nun als Quotient aus der aktuell verfügbaren Beschleunigung und der Referenzbeschleunigung ergeben.

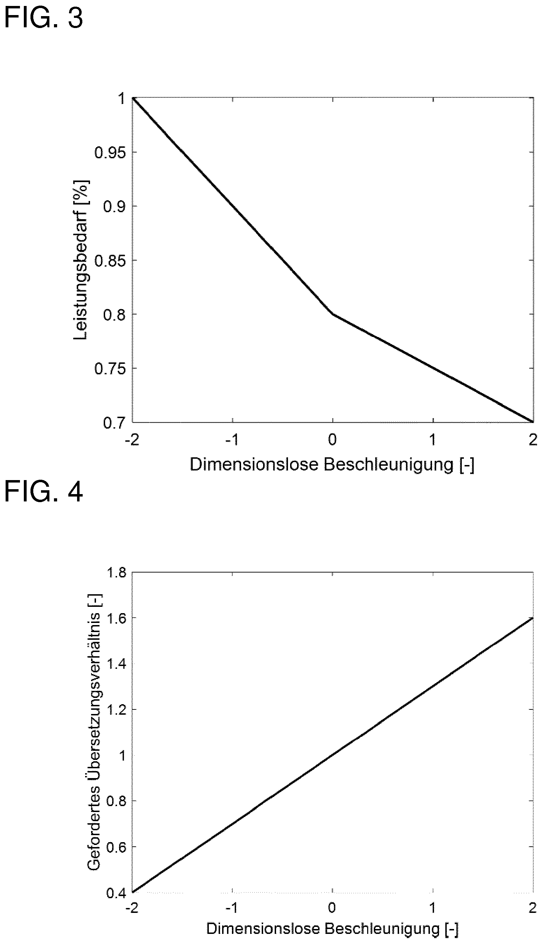

Im Schritt S16 wird der jeweils aktuelle relative Kennwert dem Betriebsdatensatz des Betriebsprogramms 18 zugeführt. Beispielhaft ist dies in den Figuren 3 und 4 dargestellt, die Ausschnitte aus einem Kennfeld des Betriebsdatensatzes zeigen.

Die Figur 3 zeigt auf der x-Achse den dimensionslosen, relativen Kennwert, hier beispielhaft einen relativen Beschleunigungswert (zum Beispiel relative Fahrzeugbeschleunigung oder relative Antriebsdrehzahlbeschleunigung). Die Figur 3 zeigt auf der y-Achse einen Leistungsbedarf.

Die Werte auf der x-Achse können beispielsweise wie folgt interpretiert werden. Der relative Beschleunigungskennwert wird kleiner als 1, wenn der Fahrwiderstand größer als 0 ist (z. B. Fahrsituation: Steigung). Es können Werte für den relativen Beschleunigungswert kleiner als 0 auftreten, falls die aktuelle Zugkraft kleiner als der Fahrwiderstand ist (z. B. Fahrsituation: Das Kraftfahrzeug 10 wird an der Steigung gedrückt). Der relative Beschleunigungswert kann ferner kleiner als 1 werden, wenn die aktuelle Fahrzeugmasse größer als die Referenzfahrzeugmasse ist. Zum Beispiel kann bei einem schwächeren Motor die Referenzmasse auf 32 Tonnen gesetzt sein, die aktuelle Fahrzeugmasse liegt aber bei 40 Tonnen. Aus dem exemplarischen Verlauf des Graphen kann entnommen werden, dass der Leistungsbedarf steigt, wenn der relative Beschleunigungswert kleiner als 1 wird. Bei einem dimensionslosen Beschleunigungswert von 0 fährt das Kraftfahrzeug 10 beispielsweise auf einer Steigung, wobei eine Antriebsleistung des Antriebs 14 im aktuellen Gang des Automatikgetriebes 16 die Steigung eben gerade noch bewältigt, das heißt, dass das Kraftfahrzeug 10 weder schneller noch langsamer wird. Der Beschleunigungswert kann auch größer als 1 werden, wenn bspw. der Fahrwiderstand kleiner als 0 (Gefälle) und/oder die aktuelle Fahrzeugmasse kleiner als die Referenzfahrzeugmasse ist (z. B. bei Teilbeladung).

Aus dem relativen Beschleunigungswert gemäß der x-Achse kann ein Leistungsbedarf gemäß der y-Achse abgeleitet werden. Basierend auf dem abgeleiteten Leistungsbedarf kann ein Motordrehzahlbedarf und damit ein Zielgang (zum Beispiel einen Gang hochschalten, Gang halten oder einen Gang runterschalten) bestimmt werden. Zur Bestimmung des Zielgangs kann auch zusätzlich ein Gangsprungkriterium, wie gemäß Figur 4 erläutert ist, verwendet werden.

In der Figur 4 ist ein Auszug aus dem Kennfeld des Betriebsdatensatzes des Betriebsprogramms 18 als exemplarischer Teil für einen Gangsprung (Überspringen von Gängen) für einen Gang dargestellt. Basierend auf dem dimensionslosen Beschleunigungswert auf der x-Achse kann ein gefordertes Übersetzungsverhältnis auf der y-Achse und somit auch ein Gangsprung abgeleitet werden.

Die Erfindung ist nicht auf die vorstehend beschriebenen bevorzugten Ausführungsbeispiele beschränkt. Vielmehr ist eine Vielzahl von Varianten und Abwandlungen möglich, die in den Schutzbereich der beigefügten Ansprüche fallen.

**Bezugszeichenliste**

| | |
|---|---|
| 10 | Kraftfahrzeug |
| 12 | Antriebsstrang |
| 14 | Antrieb |
| 16 | Automatikgetriebe |
| 18 | Betriebsprogramm |
| S10-S16 | Verfahrensschritte |

**Patentansprüche**

1. Verfahren zum Konfigurieren und Betreiben eines Automatikgetriebes (16), vorzugsweise eines Automatik-Stufenschaltgetriebes, eines Kraftfahrzeugs (10), vorzugsweise eines Nutzfahrzeugs, aufweisend:

    Bereitstellen eines, vorzugsweise fahrzeug- und/oder triebstrangunabhängigen, Betriebsprogramms (18), das zum Betreiben des Automatikgetriebes (16) in Abhängigkeit von einer Ermittlung eines relativen Kennwerts, der einen aktuellen Längsdynamikkennwert des Kraftfahrzeugs (10) ins Verhältnis zu einem Referenzlängsdynamikkennwert des Kraftfahrzeugs /(10) setzt, konfiguriert ist; und fahrzeugspezifisches und/oder triebstrangspezifisches Anpassen des Betriebsprogramms (18) durch Festlegen eines fahrzeugspezifischen und/oder triebstrangspezifischen Referenzauslegungspunkts, in dessen Abhängigkeit der Referenzlängsdynamickennwert ermittelt wird

wobei:

    der Referenzauslegungspunkt eine Referenzfahrzeugmasse, vorzugsweise eine Fahrzeugmasse bei zulässiger Vollbeladung oder eine für die Fahrdynamik eines Einsatzzwecks charakteristische Fahrzeugmasse, des Kraftfahrzeugs (10) aufweist oder von dieser abgeleitet ist; und/oder
    der Referenzauslegungspunkt eine Referenzfahrzeugzugkraft des Kraftfahrzeugs (10) aufweist oder von dieser abgeleitet ist.

2. Verfahren Anspruch 1, wobei:
der Referenzauslegungspunkt die Referenzfahrzeugmasse und die Referenzfahrzeugzugkraft des Kraftfahrzeugs (10) aufweist und die Referenzfahrzeugzugkraft in Abhängigkeit von der Referenzfahrzeugmasse festgelegt ist.

3. Verfahren nach einem der vorherigen Ansprüche, wobei:
sich Kraftfahrzeuge mit unterschiedlicher Fahrzeugmasse, unterschiedlichem Einsatzzweck und/oder unterschiedlicher Zugkraft eines Antriebstrangs (12) des jeweiligen Kraftfahrzeugs (10) bei Betrieb im Bereich des Referenzauslegungspunkts, vorzugsweise wenn eine jeweilige aktuelle Fahrzeugmasse einer jeweiligen Referenzfahrzeugmasse in Wesentlichen entspricht, fahrdynamisch im Wesentlichen gleich oder ähnlich verhalten.

4. Verfahren nach einem der vorherigen Ansprüche, wobei:
das Betriebsprogramm in einer Vielzahl von Kraftfahrzeugen mit unterschiedlicher Fahrzeugleermasse, unterschiedlichem zulässigen Gesamtgewicht, unterschiedlichen Einsatzzwecken und/oder unterschiedlicher Antriebsstrangkonfigurationen, vorzugsweise aufweisend unterschiedliche Antriebsleistungen und/oder unterschiedliche Automatikgetriebe (16), verwendet wird oder verwendbar ist.

5. Verfahren nach einem der vorherigen Ansprüche, wobei:

das Betriebsprogramm (18) einen, vorzugsweise fahrzeug- und/oder triebstrangunabhängigen, Betriebsdatensatz, vorzugsweise in Form zumindest eines Kennfelds und/oder zumindest einer Tabelle, aufweist, der als Eingangsgröße den relativen Kennwert und als Ausgangsgröße einen Leistungsbedarf, einen Motordrehzahlbedarf, ein gefordertes Übersetzungsverhältnis, einen Zielgang des Automatikgetriebes (16) und/oder eine davon abgeleitete Größe aufweist.

6. Verfahren nach einem der vorherigen Ansprüche, wobei:

der relative Kennwert während des Betriebs des Kraftfahrzeugs (10) kontinuierlich ermittelt oder aktualisiert wird; und
das Betriebsprogramm (18) das Automatikgetriebe (16) in Abhängigkeit von dem aktuellen relativen Kennwert betreibt.

7. Verfahren nach einem der vorherigen Ansprüche, wobei:
der relative Kennwert dimensionslos ist.

8. Verfahren nach einem der vorherigen Ansprüche, wobei:

der aktuelle Längsdynamikkennwert ein im Betrieb des Kraftfahrzeugs (10) aktuell abrufbarer Längsdynamikkennwert des Kraftfahrzeugs (10) ist; und/oder
der Referenzlängsdynamikkennwert ein Maximallängsdynamikkennwert bezüglich des Referenzauslegungspunkts ist.

9. Verfahren nach einem der vorherigen Ansprüche, wobei der aktuelle Längsdynamikkennwert:

eine im Betrieb des Kraftfahrzeugs (10) aktuell abrufbare Fahrzeugbeschleunigung ist, oder
eine im Betrieb des Kraftfahrzeugs (10) aktuell abrufbare Antriebsdrehzahlbeschleunigung ist, oder
ein von einer im Betrieb des Kraftfahrzeugs (10) aktuell abrufbaren Fahrzeugbeschleunigung abgeleiteter Wert ist.

10. Verfahren nach einem der vorherigen Ansprüche, wobei:
der aktuelle Längsdynamikkennwert basierend auf einer aktuellen Zugkraft eines Antriebsstrangs (12) des Kraftfahrzeugs (10), einem aktuellen Fahrwiderstand des Kraftfahrzeugs (10) und von einer aktuellen Fahrzeugmasse des Kraftfahrzeugs (10) ermittelt wird oder ermittelbar ist.

11. Verfahren nach einem der vorherigen Ansprüche, wobei der Referenzlängsdynamikkennwert:

eine maximale Fahrzeugbeschleunigung ist, oder
eine maximale Antriebsdrehzahlbeschleunigung ist; oder
ein von der maximalen Fahrzeugbeschleunigung abgeleiteter Wert ist.

12. Verfahren nach einem der vorherigen Ansprüche, wobei:
der Referenzlängsdynamikkennwert basierend auf einer Referenzfahrzeugzugkraft des Kraftfahrzeugs (10) und einer Referenzfahrzeugmasse, die vorzugsweise eine Fahrzeugmasse bei zulässiger Vollbeladung des Kraftfahrzeugs (10) ist, ermittelt wird oder ermittelbar ist.

13. Verfahren nach einem der vorherigen Ansprüche, wobei:
der aktuelle Längsdynamikkennwert und/oder der Referenzlängsdynamikkennwert in Abhängigkeit von einer Antriebszusatzmasse, die durch ein Massenträgheitsmoment eines Antriebs (14) des Kraftfahrzeugs (10) in einem jeweils eingelegten Gang des Automatikgetriebes (16) bewirkt wird, ermittelt wird oder ermittelbar ist.

14. Kraftfahrzeug (10), vorzugsweise Nutzfahrzeug, mit einem Automatikgetriebe (16), das mit einem Verfahren nach einem der vorherigen Ansprüche betrieben wird und/oder konfiguriert ist.

**Claims**

1. A method for configuring and operating an automatic transmission (16), preferably an automatic step-shift transmission, of a motor vehicle (10), preferably a utility vehicle, comprising:

providing an operating program (18), preferably independent of the vehicle and/or drive train, which is configured to operate the automatic transmission (16) as a function of a determination of a relative characteristic value which sets a current longitudinal dynamic characteristic value of the motor vehicle (10) in relation to a reference longitudinal dynamic characteristic value of the motor vehicle (10); and
adapting the operating program (18) in a vehicle-specific and/or drive train-specific manner by defining a vehicle-specific and/or drive train-specific reference design point, as a function of which the reference longitudinal dynamics characteristic value is determined wherein:

the reference design point comprises a reference vehicle mass, preferably a vehicle mass with a permissible full load or a vehicle mass characteristic of the driving dynamics of a purpose of use, of the motor vehicle (10) or is derived therefrom; and/or the reference design point comprises or is derived from a reference vehicle tractive force of the motor vehicle (10).

2. The method of claim 1, wherein:
the reference design point comprises the reference vehicle mass and the reference vehicle tractive force of the motor vehicle (10) and the reference vehicle tractive force is determined as a function of the reference vehicle mass.

3. The method according to any one of the preceding claims, wherein:
motor vehicles with different vehicle mass, different intended use and/or different tractive force of a drive train (12) of the respective motor vehicle (10) behave substantially the same or similar in terms of driving dynamics during operation in the portion of the reference design point, preferably when a respective current vehicle mass substantially corresponds to a respective reference vehicle mass.

4. The method according to any one of the preceding claims, wherein:
the operating program is used or usable in a plurality of motor vehicles comprising different vehicle masses, different permissible total weights, different purposes of use and/or different drivetrain configurations, preferably comprising different drive powers and/or different automatic transmissions (16).

5. The method according to any one of the preceding claims, wherein:
the operating program (18) comprises an operating data set, preferably independent of the vehicle and/or drive train, preferably in the form of at least one characteristic diagram and/or at least one table, which comprises the relative characteristic value as input variable and a power requirement, an engine speed requirement, a required transmission ratio, a target gear of the automatic transmission (16) and/or a variable derived therefrom as output variable.

6. The method according to any one of the previous claims, wherein:

the relative characteristic value is continuously determined or updated during operation of the motor vehicle (10); and
the operating program (18) operates the automatic transmission (16) in dependence on the current relative characteristic value.

7. The method according to any one of the preceding claims, wherein:
the relative characteristic value is dimensionless.

8. The method according to any one of the previous claims, wherein:

the current longitudinal dynamic characteristic value is a currently retrievable longitudinal dynamic characteristic value of the motor vehicle (10) during operation of the motor vehicle (10); and/or
the reference longitudinal dynamic characteristic value is a maximum longitudinal dynamic characteristic value with respect to the reference design point.

9. The method according to any one of the previous claims, wherein the current longitudinal dynamic characteristic value:

is a vehicle acceleration currently retrievable during operation of the motor vehicle (10), or
a drive speed acceleration currently retrievable during operation of the motor vehicle (10), or
is a value derived from a vehicle acceleration currently retrievable during operation of the motor vehicle (10).

10. The method according to any one of the preceding claims, wherein:
the current longitudinal dynamic characteristic value is or can be determined based on a current tractive force of a drive train (12) of the motor vehicle (10), a current driving resistance of the motor vehicle (10) and from a current vehicle mass of the motor vehicle (10).

11. The method according to any one of the previous claims, wherein the reference longitudinal dynamic characteristic value:

is a maximum vehicle acceleration, or
is a maximum drive speed acceleration; or
is a value derived from the maximum vehicle acceleration.

12. The method according to any one of the preceding claims, wherein:
the reference longitudinal dynamic characteristic value is or can be determined based on a reference vehicle tractive force of the motor vehicle (10) and a reference vehicle mass, which is preferably a vehicle mass with a permissible full load of the motor vehicle (10).

13. The method according to any one of the previous claims, wherein:

the current longitudinal dynamic characteristic value and/or the reference longitudinal dynamic characteristic value is determined or can be determined as a function of an additional drive mass which is caused by a mass moment of inertia of a drive (14) of the motor vehicle (10) in a respectively engaged gear of the automatic transmission (16).

14. A motor vehicle (10), preferably utility vehicle, having an automatic transmission (16) which is operated and/or configured using a method according to any one of the previous claims.

**Revendications**

1. Procédé de configuration et de fonctionnement d'une transmission automatique (16), de préférence d'une transmission automatique à changement de vitesses, d'un véhicule automobile (10), de préférence d'un véhicule utilitaire, ledit procédé comprenant les étapes suivantes :

fournir un programme de fonctionnement (18), de préférence indépendant du véhicule et/ou de la chaîne cinématique, qui est utilisé pour faire fonctionner la transmission automatique (16) en fonction de la détermination d'une valeur caractéristique relative qui met une valeur caractéristique dynamique longitudinale du véhicule automobile (10) en rapport avec une valeur caractéristique dynamique longitudinale de référence du véhicule automobile/(10) ; et

adapter de manière spécifique au véhicule et/ou à la chaîne cinématique le programme de fonctionnement (18) par définition d'un point de conception de référence, spécifique au véhicule et/ou à la chaîne cinématique, en fonction duquel la valeur caractéristique de dynamique longitudinale de référence est déterminée, le point de conception de référence comportant une masse de véhicule de référence, de préférence une masse de véhicule à pleine charge admissible ou une masse de véhicule, caractéristique de la dynamique de conduite d'une utilisation prévue, du véhicule automobile (10) ou étant déduit de celle-ci ; et/ou le point de construction de référence comportant une force de traction de véhicule de référence du véhicule automobile (10) ou étant dérivé de celle-ci.

2. Procédé selon la revendication 1, le point de conception de référence comportant la masse de véhicule de référence et la force de traction de véhicule de référence du véhicule automobile (10) et la force de traction de véhicule de référence étant définie en fonction de la masse de véhicule de référence.

3. Procédé selon l'une des revendications précédentes, des véhicules automobiles ayant différentes masses de véhicule, différentes utilisations prévues et/ou différentes forces de traction d'une chaîne cinématique (12) du véhicule automobile respectif (10) lors d'un fonctionnement dans la zone du point de conception de référence, de préférence lorsque la masse de véhicule actuelle respective correspond sensiblement à une masse de véhicule de référence respective, se comportant de manière sensiblement identique ou similaire en termes de dynamique de conduite.

4. Procédé selon l'une des revendications précédentes, le programme de fonctionnement étant utilisé ou pouvant être utilisé dans un grand nombre de véhicules automobiles de différentes masses à vide, de différents poids totaux autorisés, de différentes utilisations prévues et/ou de différentes configurations de chaîne cinématique, de préférence ayant différentes puissances d'entraînement et/ou différentes transmissions automatiques (16).

5. Procédé selon l'une des revendications précédentes, le programme de fonctionnement (18) comportant un ensemble de données de fonctionnement, de préférence indépendant du véhicule et/ou de la chaîne cinématique, de préférence sous la forme d'au moins une carte caractéristique et/ou d'au moins un tableau, qui présente la valeur caractéristique relative comme grandeur d'entrée et une demande de puissance, une demande de régime moteur, un rapport de transmission requis, un rapport cible de la transmission automatique (16) et/ou une grandeur qui en dérive comme grandeur de sortie.

6. Procédé selon l'une des revendications précédentes,

la valeur caractéristique relative étant déterminée ou actualisée en continu pendant le fonctionnement du véhicule automobile (10) ; et le programme de fonctionnement (18) faisant fonctionner la transmission automatique (16) en fonction de la valeur caractéristique relative actuelle.

7. Procédé selon l'une des revendications précédentes, la valeur caractéristique relative étant sans dimension.

8. Procédé selon l'une des revendications précédentes,

la valeur caractéristique de dynamique longitudinale actuelle étant une valeur caractéristique de dynamique longitudinale du véhicule automobile (10) qui peut actuellement être appelée lorsque le véhicule automobile (10) est en fonctionnement ; et/ou la valeur caractéristique de dynamique longitudinale de référence étant une valeur caractéristique de dynamique longitudinale maximale par rapport au point de conception de référence.

9. Procédé selon l'une des revendications précédentes, la valeur caractéristique de dynamique longitudinale actuelle étant :

une accélération du véhicule qui peut actuellement être appelée pendant le fonctionnement du véhicule automobile (10), ou
une accélération de vitesse de rotation d'entraînement qui peut actuellement être appelée pendant le fonctionnement du véhicule automobile (10), ou
une valeur dérivée d'une accélération de véhicule qui peut actuellement être appelée pendant le fonctionnement du véhicule automobile (10).

10. Procédé selon l'une des revendications précédentes,
la valeur caractéristique de dynamique longitudinale actuelle étant déterminée ou pouvant être déterminée sur la base d'une force de traction actuelle d'une chaîne cinématique (12) du véhicule automobile (10), d'une résistance au roulement actuelle du véhicule automobile (10) et d'une masse de véhicule actuelle du véhicule automobile (10).

11. Procédé selon l'une des revendications précédentes, la valeur caractéristique de dynamique longitudinale de référence étant :

une accélération maximale du véhicule, ou
une accélération de vitesse de rotation d'entraînement maximale ; ou
une valeur dérivée de l'accélération maximale du véhicule.

12. Procédé selon l'une des revendications précédentes,
la valeur caractéristique de dynamique longitudinale de référence étant déterminée ou pouvant être déterminée sur la base d'une force de traction de véhicule de référence du véhicule automobile (10) et d'une masse de véhicule de référence qui est de préférence une masse de véhicule à pleine charge admissible du véhicule automobile (10) .

13. Procédé selon l'une des revendications précédentes,
la valeur caractéristique de dynamique longitudinale actuelle et/ou la valeur caractéristique de dynamique longitudinale de référence étant déterminées ou pouvant être déterminées en fonction d'une masse d'entraînement supplémentaire due à un moment d'inertie de masse d'un entraînement (14) du véhicule automobile (10) dans un rapport respectivement engagé de la transmission automatique (16).

14. Véhicule automobile (10), de préférence véhicule utilitaire, comprenant une transmission automatique (16) qui fonctionne et/ou est configurée avec un procédé selon l'une des revendications précédentes.

FIG. 1

FIG. 2

## FIG. 3

Leistungsbedarf [%] vs Dimensionslose Beschleunigung [-]

## FIG. 4

Gefordertes Übersetzungsverhältnis [-] vs Dimensionslose Beschleunigung [-]

**IN DER BESCHREIBUNG AUFGEFÜHRTE DOKUMENTE**

**In der Beschreibung aufgeführte Patentdokumente**

- US 2001007964 A1
- DE 102007015355 A1